# EUROPEAN PATENT APPLICATION

(11) **EP 3 832 176 A1**
(43) Date of publication of application: **09.06.2021**
(21) Application number: 19843423.5
(22) Date of filing: 23.07.2019
(51) Int. Cl.: F16J 15/12

(54) **SEALING DEVICE AND GASKET**

(30) Priority: 02.08.2018 JP 2018145983; 27.09.2018 JP 2018182694
(71) Applicant: NOK Corporation, Minato-ku Tokyo 105-8585 (JP)
(72) Inventor: AMANO Takuya, Makinohara-shi, Shizuoka 421-0532 (JP); UCHIYAMA Masasuke, Makinohara-shi, Shizuoka 421-0532 (JP); NAKAGAWA Yuki, Makinohara-shi, Shizuoka 421-0532 (JP)
(74) Representative: Global IP Europe Patentanwaltskanzlei
(86) International application number: PCT/JP2019/028831
(87) International publication number: WO 2020/026893

(57) **Abstract**

A sealing apparatus using a gasket (1) in which a gasket main body (12) is integrally formed with a reinforcing ring (11), the gasket main body (12) has a one-end-side seal bead (122) and an other-end-side seal bead (123) which are positioned on one end (11a) side and another end side of the reinforcing ring (11) in an axial direction and are oriented in directions facing away from each other in the axial direction, the one-end-side seal bead (122) is closely contacted on a bottom surface (21a) of an attachment recessed part (21) formed in a housing (2), and the other-end-side seal bead (123) is closely contacted on a cover which closes the attachment recessed part (21) of the housing (2), wherein in a state of being attached in the attachment recessed part (21) with the cover removed from the housing (2), at least a part of an outer peripheral portion of the gasket (1) serves as a supportable portion (13) by providing a flange (14) consecutively provided on an outer periphery side of the reinforcing ring (11).

## Description

### Technical Field

The present invention relates to a sealing apparatus and a gasket and, in particular, to a sealing apparatus and a gasket that do not affect sealing properties, and facilitate removal of the gasket from an inside of an attachment recessed part.

### Background Art

What uses a gasket integrally having a pair of seal beads that are positioned at both the ends of a gasket main body in the axial direction and are oriented in directions facing away from each other in the axial direction has been known as a sealing apparatus that seals the intermediation between connection portions and the like of a housing (Patent Literature 1).

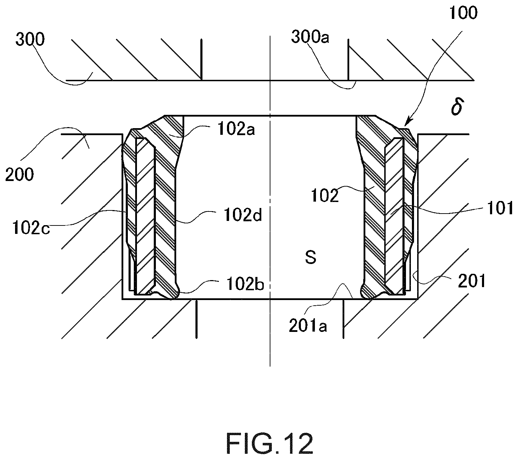

As illustrated in Fig. 12, the gasket 100 of this sealing apparatus has a structure where a gasket main body 102 made of a rubber-like elastic material (a rubber material or a synthetic resin material having rubber-like elasticity) is integrally formed with a reinforcing ring 101 made of metal. On the gasket main body 102, a pair of seal beads 102a and 102b that are positioned at both the ends thereof in the axial direction and are oriented on an inner periphery side and in directions facing away from each other in the axial direction are integrally formed.

This gasket 100 is disposed in an attachment recessed part 201 formed at an opening end portion of a housing 200 forming a sealing target space S. By being compressed in the axial direction between a bottom surface 201a of this attachment recessed part 201 and an end surface 300a of a cover 300, a gap δ between the housing 200 and the cover 300 is sealed.

### Document List

### Patent Literature

Patent Literature 1: WO2015/137491

### Summary of Invention

### Technical Problem

As for the conventional sealing apparatus described in Patent Literature 1, when the gasket 100 is replaced, the cover 300 is removed from the housing 200 and the gasket 100 is removed from the inside of the attachment recessed part 201. At this time, according to the conventional sealing apparatus, a substantial entirety of the gasket 100 is positioned in the attachment recessed part 201, and a substantial entirety of the outer peripheral surface 102c of the gasket 100 is hidden by the inner peripheral surface of the attachment recessed part 201, and any site that can be supported by a driver or the like is not on the outer peripheral surface 102c of the gasket 100. Accordingly, it is significantly difficult to remove the gasket 100 from the inside of the attachment recessed part 201.

The gasket 100 receives, on the inner peripheral surface 102d, a pressure toward the outer periphery in a usage state. Accordingly, at a time for replacement, a seal bead 102b and the outer peripheral surface 102c are sometimes adhered on the bottom surface 201a and the inner peripheral surface of the attachment recessed part 201. It is thus still difficult to remove the gasket 100 from the attachment recessed part 201 while holding the gasket 100 on the inner peripheral surface 102d. This is because if the gasket 100 is held on the inner peripheral surface 102d, the seal bead 102b and the outer peripheral surface 102c are pressed against the bottom surface 201a and the inner peripheral surface of the attachment recessed part 201.

It is not preferable to form a support portion by changing the seal bead 102a of the gasket 100 to have a shape that can be easily supported, because there is a possibility of reducing the sealing properties of the seal bead 102a.

Accordingly, the present invention has an object to provide a sealing apparatus and a gasket that do not affect the sealing properties and facilitate removal of the gasket from the inside of the attachment recessed part.

Another object of the present invention is identified by the following description.

### Solution to Problem

The problem described above is solved by each of the following inventions.
1. A sealing apparatus using a gasket in which a gasket main body is integrally formed with a reinforcing ring, the gasket main body having a one-end-side seal bead and an other-end-side seal bead which are positioned on one end side and another end side of the reinforcing ring in an axial direction and are oriented in directions facing away from each other in the axial direction, the one-end-side seal bead being closely contacted on a bottom surface of an attachment recessed part formed in a housing, and the other-end-side seal bead being closely contacted on a cover which closes the attachment recessed part of the housing,
   characterized in that, in a state of being attached in the attachment recessed part with the cover removed from the housing, at least a part of an outer peripheral portion of the gasket serves as a supportable portion by providing a flange consecutively provided on an outer periphery side of the reinforcing ring.
2. The sealing apparatus according to the 1, characterized in that a gap with an inner peripheral surface of the attachment recessed part is formed in at least a part of the flange.
3. A gasket in which a gasket main body is integrally formed with a reinforcing ring, the gasket main body having a one-end-side seal bead and an other-end-side seal bead which are positioned on one end side and another end side of the reinforcing ring in an axial direction and are oriented in directions facing away from each other in the axial direction, the one-end-side seal bead being closely contacted on a bottom surface of an attachment recessed part formed in a housing, and the other-end-side seal bead being closely contacted on a cover which closes the attachment recessed part of the housing,
   characterized in that, in a state of being attached in the attachment recessed part with the cover removed from the housing, at least a part of an outer peripheral portion of the gasket serves as a supportable portion by providing a flange consecutively provided on an outer periphery side of the reinforcing ring.
4. The gasket according to the 3, characterized in that a gap with an inner peripheral surface of the attachment recessed part is formed in at least a part of the flange.
5. The gasket according to the 3 or 4, characterized in that a consecutive link portion between the reinforcing ring and the flange is a curved surface.
6. A sealing apparatus using a gasket in which a gasket main body is integrally formed with a reinforcing ring, the gasket main body having a one-end-side seal bead and an other-end-side seal bead which are positioned on one end side and another end side of the reinforcing ring in an axial direction and are oriented in directions facing away from each other in the axial direction, the one-end-side seal bead being closely contacted on a bottom surface of an attachment recessed part formed in a housing, and the other-end-side seal bead being closely contacted on an end surface of a cover which closes the attachment recessed part of the housing,
   characterized in that, in a state where the gasket is attached in the attachment recessed part with the cover attached, by forming a gap with the end surface of the cover in at least a part of an outer peripheral portion of the attachment recessed part of the housing, at least the part of the outer peripheral portion of the gasket serves as a supportable portion facing an outside, in a state where the cover is removed.
7. The sealing apparatus according to the 6, characterized in that the gap is intermittently formed at an equal angle interval on the outer peripheral portion of the attachment recessed part.
8. The sealing apparatus according to the 6, characterized in that the gap is formed consecutively over an entire periphery of the outer peripheral portion of the attachment recessed part.

### Effects of Invention

According to the present invention, a sealing apparatus and a gasket that do not affect the sealing properties and facilitate removal of the gasket from the inside of the attachment recessed part can be provided.

### Brief Description of Drawings

[Fig. 1] A perspective view (a) and a plan view (b) of a gasket according to a first embodiment of the present invention.
[Fig. 2] A longitudinal sectional view of a sealing apparatus according to the first embodiment of the present invention.
[Fig. 3] A longitudinal sectional view of comparing the sealing apparatus according to the first embodiment of the present invention with a conventional sealing apparatus.
[Fig. 4] A longitudinal sectional view of a sealing apparatus according to a second embodiment of the present invention.
[Fig. 5] A longitudinal sectional view of a sealing apparatus according to another embodiment of the present invention.
[Fig. 6] A perspective view (a) (with a cover being removed), a plan view (b) (with the cover being removed) and a longitudinal sectional view (c) taken along line A-A of (b) (with the cover being attached) of a sealing apparatus according to a third embodiment of the present invention.
[Fig. 7] A perspective view (a) (with a cover being removed), a plan view (b) (with the cover being removed) and a longitudinal sectional view (c) taken along line B-B of (b) (with the cover being attached) of a sealing apparatus according to a fourth embodiment of the present invention.
[Fig. 8] A perspective view (a) (with a cover being removed), a plan view (b) (with the cover being removed) and a longitudinal sectional view (c) taken along line C-C of (b) (with the cover being attached) of a sealing apparatus according to a fifth embodiment of the present invention.
[Fig. 9] A perspective view (a) (with a cover and a gasket being removed) and a longitudinal sectional view (b) taken along the center line (with the cover and the gasket being attached) of a sealing apparatus according to a sixth embodiment of the present invention.
[Fig. 10] An exploded perspective view (a) (with a gasket being removed) and a longitudinal sectional view (b) taken along the center line (with a cover and the gasket being attached) of a sealing apparatus according to a seventh embodiment of the present invention.
[Fig. 11] An exploded perspective view (a) and a longitudinal sectional view (b) taken along line A-A (with a cover being attached) of a sealing apparatus according to the third embodiment of the present invention in a mode where gaps are filled with bulging portions for the gaps.
[Fig. 12] A longitudinal sectional view of a conventional gasket.

### Description of Embodiments

Hereinafter, sealing apparatus and gaskets according to preferable embodiments of the present invention will be described with reference to the drawings.

### [First embodiment]

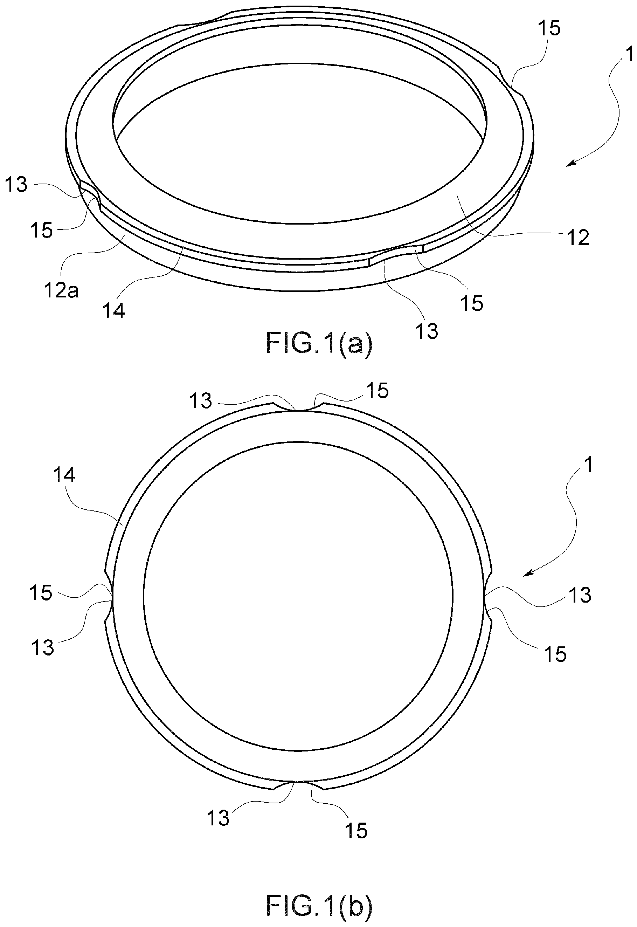

Fig. 1 is a perspective view (a) and a plan view (b) of a gasket according to a first embodiment of the present invention.

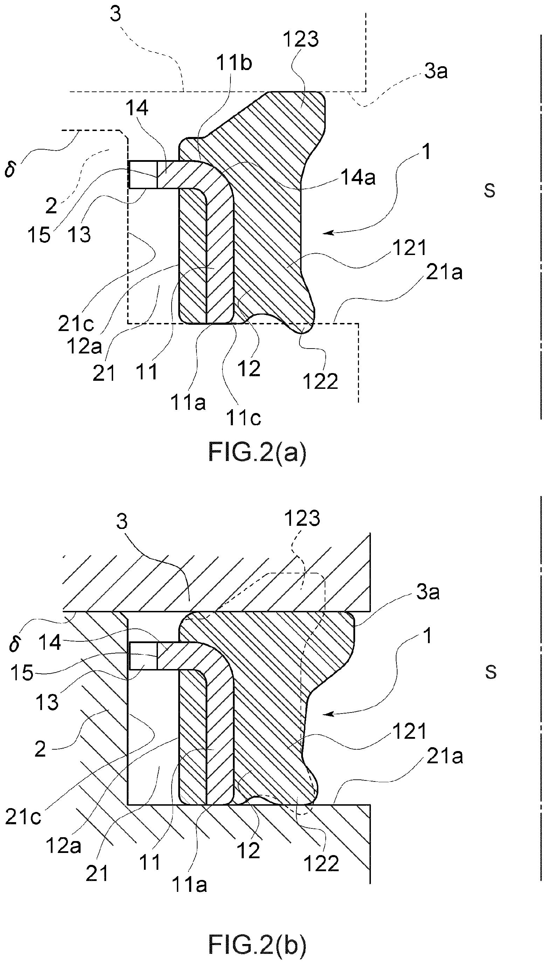

Fig. 2 is a longitudinal sectional view of a sealing apparatus according to the first embodiment of the present invention.

This sealing apparatus is used as, for example, sealing means for a joint portion between an AT housing in an automatic transmission (AT) and a clutch housing of an automobile, and includes a gasket 1, a housing 2 and a cover 3 as shown in Fig. 2.

As shown in Fig. 2, in the gasket 1, a gasket main body 12 is formed integrally with a reinforcing ring 11. The reinforcing ring 11 is provided for supplying the gasket 1 with strength and is formed to have a cylindrical shape appropriately using a metal, such as low-carbon free cutting steel, for example.

The length of the reinforcing ring 11 in the axial direction (the vertical direction in Fig. 2) is smaller than the depth of an attachment recessed part 21.

The gasket main body 12 is made of a rubber-like elastic material (a rubber material or a synthetic resin material having rubber-like elasticity) and is formed integrally with the inner peripheral surface and the outer peripheral surface of the reinforcing ring 11.

The gasket main body 12 includes: a base portion 121 in which the reinforcing ring 11 is embedded; and a one-end-side seal bead 122 and an other-end-side seal bead 123 that are consecutive with the base portion 121, are positioned at both the ends of the reinforcing ring 11 in the axial direction, and are oriented on the inner periphery side and in the directions facing away from each other in the axial direction. The one-end-side seal bead 122 is closely contacted on a bottom surface 21a of the attachment recessed part 21. The other-end-side seal bead 123 is closely contacted on an end surface 3a of the cover 3.

The base portion 121 of the gasket main body 12 is formed from the inner peripheral surface to the outer peripheral surface of the reinforcing ring 11. Another end 11b of the reinforcing ring 11 in the axial direction is covered with the thinned gasket main body 12. One end 11a of the reinforcing ring 11 in the axial direction protrudes from an outer peripheral portion of the one-end-side seal bead 122 in this embodiment, and may be covered with the gasket main body 12.

The one-end-side seal bead 122 is formed to have a thinner wall and a smaller volume in comparison with the other-end-side seal bead 123. Accordingly, the rigidity is lower than that of the other-end-side seal bead 123. In other words, the other-end-side seal bead 123 is formed to have a thicker wall and a larger volume in comparison with the one-end-side seal bead 122, thereby achieving a higher rigidity than that of the one-end-side seal bead 122. Accordingly, when the gasket main body 12 receives a compression force in the axial direction, the amount of deformation of the one-end-side seal bead 122 is larger than the amount of deformation of the other-end-side seal bead 123.

The gasket main body 12 is formed to have an outer diameter smaller than the inner diameter of the attachment recessed part 21. A flange 14 is consecutively provided for the reinforcing ring 11 on its outer periphery side. The flange 14 is provided such that a part of the reinforcing ring 11 adjacent to its other end 11b in the axial direction nearer to the cover 3 is bent toward the outer periphery side. The outer periphery side of the flange 14 protrudes from the gasket main body 12 on the outer periphery side. The flange 14 is formed to have an outer diameter substantially equal to the inner diameter of the attachment recessed part 21. Accordingly, in the gasket 1, an inner peripheral surface 21c of the attachment recessed part 21 serves as a positioning surface, which can maintain the concentricity with respect to gasket 1 and attached recessed part 21.

In a state where the gasket 1 is attached in the attachment recessed part 21 with the cover 3 being removed from the housing 2, at least parts of the outer peripheral portion serve as supportable portions 13 owing to the flange 14 being formed. The supportable portions 13 are sites that can be supported at the outer peripheral portion of the gasket 1 by a jig, such as a driver, or fingers, when the cover 3 is removed from the housing 2 and the gasket 1 is removed from the inside of the attachment recessed part 21 and replaced.

Gaps with the inner peripheral surface 21c of the attachment recessed part 21 are formed at the outer peripheral portion of the flange 14 according to this embodiment. The gaps are formed by providing recessed portions 15 for the outer peripheral portion of the flange 14. At the parts of the recessed portions 15, the gaps with the inner peripheral surface 21c are formed. In this embodiment, the recessed portions 15 are provided at four sites on the outer periphery of the flange 14 at 90° intervals.

The supportable portions 13 according to this embodiment are the outer peripheral portion or a lower surface (a surface nearer to the bottom surface 21a) of the flange 14. An outer peripheral surface portion 12a of the gasket main body 12 other than the flange 14 can also be used as the supportable portions 13. By inserting a jig into the gap between the flange 14 and the inner peripheral surface 21c and supporting the supportable portions 13, the gasket 1 can be easily removed from the inside of the attachment recessed part 21. By forming the gap, the gasket 1 can be easily removed from the inside of the attachment recessed part 21 without using the jig.

In the sealing apparatus, it is significantly easy to remove the gasket 1 from the inside of the attachment recessed part 21 owing to the supportable portions 13. Even when the supportable portions 13 are supported, the seal beads 122 and 123 and the outer peripheral surface of the gasket main body 12 are not pressed against the bottom surface 21a and the inner peripheral surface 21c of the attachment recessed part 21. Accordingly, even when the seal bead 122 and the outer peripheral surface adhere to the bottom surface 21a and the inner peripheral surface 21c, it is easy to remove the gasket 1 from the inside of the attachment recessed part 21.

The seal beads 122 and 123 of the gasket 1 are not changed to have easily supportable shapes. Accordingly, favorable sealing properties can be maintained.

It is preferable that a consecutive link portion 14a between the reinforcing ring 11 and the flange 14 have a curved surface. Accordingly, when a deformation force to the outer periphery side due to a fluid pressure is applied to the other-end-side seal bead 123, it can prevent stress from being concentrated against the inner peripheral edge of the reinforcing ring 11 and can effectively prevent peeling of adhesion and a crack from occurring.

Next, operation when the gasket 1 is attached in the attachment recessed part 21 will be described.

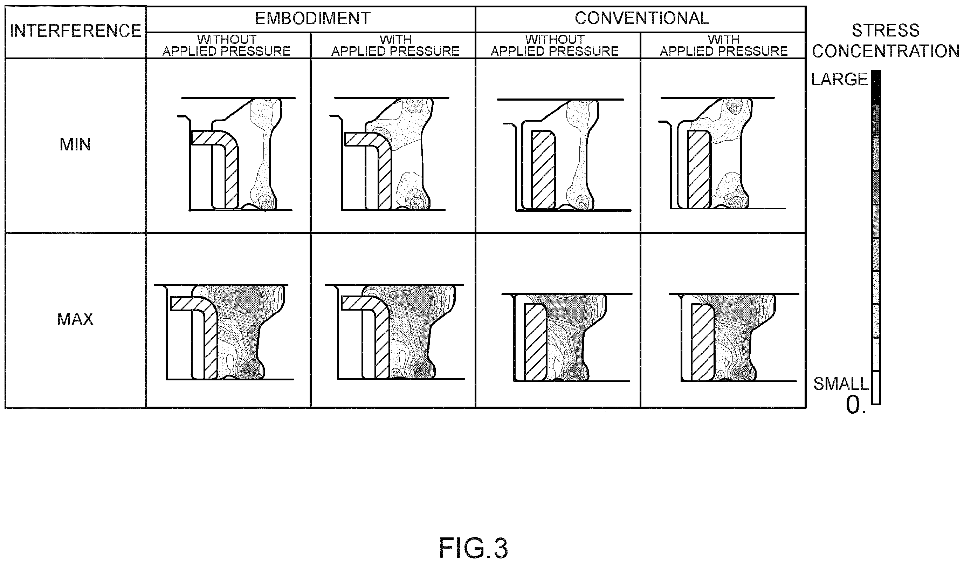

The gasket 1 is disposed in the attachment recessed part 21 formed in the housing 2. In Fig. 3, the one-end-side seal bead 122 is nearer to the bottom surface 21a of the attachment recessed part 21. However, the assembling direction is not limited.

When the gasket 1 is disposed in the attachment recessed part 21, and the housing 2 and the cover 3 are clamped with bolts or the like, not shown, the gasket 1 is pressed by the cover 3, and the one-end-side and other-end-side seal beads 122 and 123 receive the compression force in the axial direction. At this time, the other-end-side seal bead 123 has a thick wall, a large volume and a high rigidity, while the one-end-side seal bead 122 has a low rigidity and tends to be deformed. Accordingly, the one-end-side seal bead 122 is preferentially deformed and collapses toward the inner periphery side. As a result, the gasket 1 is set in the attachment recessed part 21 so as to be on the one-end-side seal bead 122 side, that is, in a state of residing unevenly closer to the bottom surface 21a of the attachment recessed part 21.

In this set state, the gasket 1 is in a state where the one end 11a of the reinforcing ring 11 in the axial direction is contacted on the bottom surface 21a of the attachment recessed part 21 or is close to the bottom surface 21a. Accordingly, the one-end-side seal bead 122 does not further collapse toward the inner periphery side.

Subsequently, after clamping of the housing 2 and the cover 3 is completed, the compression force in the axial direction is absorbed by the other-end-side seal bead 123 collapsing toward the inner periphery side or being compressed. This is because the other-end-side seal bead 123 has a sufficient interference with the end surface 3a of the cover 3 even if the one-end-side seal bead 122 has completely collapsed and the one end 11a of the reinforcing ring 11 in the axial direction is in the state of being contacted on the bottom surface 21a of the attachment recessed part 21. Accordingly, as for the gasket 1, the one-end-side seal bead 122 is contacted closely on the bottom surface 21a of the attachment recessed part 21, and the other-end-side seal bead 123 is contacted closely on the end surface 3a of the cover 3, thus sealing the sealing target space S.

When a fluid pressure that is a high pressure is present on the inner periphery side of the gasket 1 in this attached state, the fluid pressure is applied on each of the one-end side and other-end-side seal beads 122 and 123. At this time, the one-end-side seal bead 122 having a low rigidity is backed up from the outer periphery side by the one end 11a of the reinforcing ring 11 in the axial direction residing at the position contacted on or close to the bottom surface 21a of the attachment recessed part 21. Accordingly, deformation of the one-end-side seal bead 122 toward the outer periphery side is suppressed, and there is no possibility of sticking out to the outer periphery side, thus maintaining excellent sealing properties.

The gasket 1 in the attached state is pressed against the bottom surface 21a of the attachment recessed part 21 and resides unevenly closer to the bottom surface 21a of the attachment recessed part 21, and the one end 11a of the reinforcing ring 11 in the axial direction is contacted on the bottom surface 21a to prevent further movement. Accordingly, there is substantially no movement in the axial direction. Consequently, even if the fluid pressure is intermittently and repetitively applied, there is no possibility of causing an abrasion or the like due to repetitive movement of the gasket 1 in the axial direction with a large stroke.

When the other-end-side seal bead 123 having a relatively high rigidity receives a fluid pressure, a force of deformation to the outer periphery side is applied. However, this bead has a thicker wall and a larger volume than the one-end-side seal bead 122, and is contacted closely on the end surface 3a of the cover 3 with a sufficient interference. Consequently, large collapse of the other-end-side seal bead 123 to the outer periphery side does not occur. Accordingly, the other-end-side seal bead 123 is contacted further closely on the end surface 3a, which can improve the sealing properties. Accordingly, the gasket 1 exert excellent sealing properties also on the other-end-side seal bead 123.

Furthermore, the other end 11b of the reinforcing ring 11 in the axial direction is disposed in the gasket main body 12 adjacent to the other-end-side seal bead 123. Consequently, the other end 11b side of the reinforcing ring 11 in the axial direction functions to prevent the other-end-side seal bead 123 from collapsing to the outer periphery side. Accordingly, the other-end-side seal bead 123 does not stick out to the gap δ.

It is preferable that a chamfer 11c be formed on one end inner peripheral edge of the reinforcing ring 11 as illustrated. Accordingly, when a deformation force to the outer periphery side due to a fluid pressure is applied to the one-end-side seal bead 122, it can prevent stress from being concentrated against the inner peripheral edge of the reinforcing ring 11 and can effectively prevent peeling of adhesion and a crack from occurring.

Fig. 3 is a longitudinal sectional view of comparing the sealing apparatus according to the first embodiment of the present invention with a conventional sealing apparatus.

As shown in Fig. 3, as to the gasket 1 of the embodiment and the conventional gasket, a strain distribution in the gasket main body 12 was analyzed. As for the analysis of the strain distribution, the internal stress without an applied pressure and that with an applied pressure in a state of the maximum interference and in a state of the minimum interference were analyzed.

In the gasket 1 of the embodiment, the consecutive link portion 14a between the reinforcing ring 11 and the flange 14 is a curved surface. Accordingly, it was found that in comparison with the conventional gasket without a flange, the internal stress in proximity to the consecutive link portion 14a was reduced, and peeling of adhesion and a crack are prevented at this site. That is, in the state of the maximum interference, the concentration of stress, which was large even without an applied pressure in the conventional gasket, was small even with an applied pressure according to the gasket 1 of the embodiment.

### [Second embodiment]

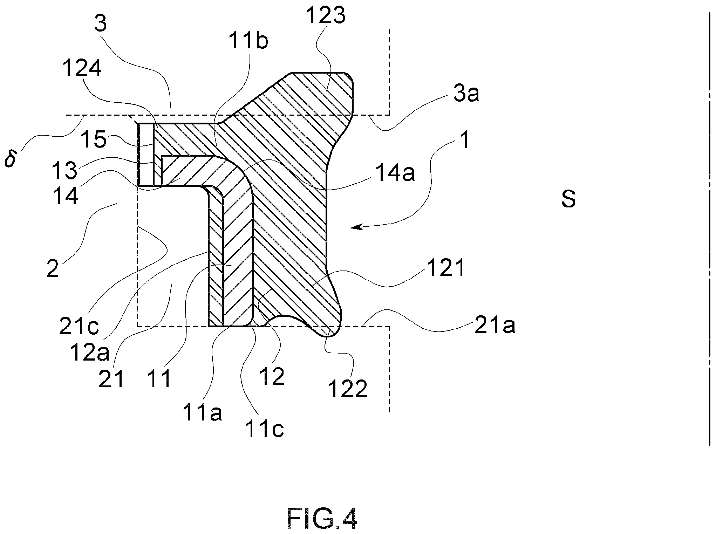

Fig. 4 is a longitudinal sectional view of a sealing apparatus according to a second embodiment of the present invention.

In this sealing apparatus, the flange 14 of the gasket 1 may include a cover portion 124 consecutively provided integrally from the gasket main body 12, as shown in Fig. 4. The cover portion 124 serves as an upper surface portion (a surface nearer to the cover 3) and an outer peripheral surface portion of the flange 14.

In this embodiment, the supportable portions 13 are the cover portion 124 or a lower surface (a surface nearer to the bottom surface 21a) of the flange 14 serving as the outer peripheral surface portion of the flange 14. That is, in a state where the gasket 1 is attached in the attachment recessed part 21 and the cover 3 is removed from the housing 2, the cover portion 124 which is at least a part of the outer peripheral portion of the gasket 1 and serves as the outer peripheral surface portion of the flange 14, or the lower surface (the surface nearer to the bottom surface 21a) of the flange 14, serves as supportable portions 13 facing the outside. An outer peripheral surface portion 12a of the gasket main body 12 other than the flange 14 can also be used as the supportable portions 13.

If the flange 14 is provided with recessed portions 15, the recessed portions 15 are formed at the cover portion 124 of the flange 14. In this case, the recessed portions 15 may have a depth (width) reaching a metal portion in the cover portion 124, or have a depth (width) not reaching the metal portion and being formed only at the cover portion 124. By the recessed portions 15, a gap with the inner peripheral surface 21c of the attachment recessed part 21 is formed. In a state where the gasket 1 is attached in the attachment recessed part 21 and the cover 3 is removed from the housing 2, at least a part of the outer peripheral portion of the gasket 1 (parts corresponding to the recessed portions 15, the lower surface of the flange 14 (the surface nearer to the bottom surface 21a) or the outer peripheral surface portion 12a that is of the gasket main body 12 and is other than the flange 14) can serve as supportable portions 13 facing the outside.

The supportable portions 13 are sites that can be supported at the outer peripheral portion of the gasket 1, when the cover 3 is removed from the housing 2 and the gasket 1 is removed from the inside of the attachment recessed part 21 and replaced. It is significantly easy to remove the gasket 1 from the inside of the attachment recessed part 21 owing to the supportable portions 13. Even when the supportable portions 13 are supported, the seal beads 122 and 123 and the outer peripheral surface of the gasket main body 12 are not pressed against the bottom surface 21a and the inner peripheral surface 21c of the attachment recessed part 21. Accordingly, even when the seal bead 122 and the outer peripheral surface adhere to the bottom surface 21a and the inner peripheral surface 21c, it is easy to remove the gasket 1 from the inside of the attachment recessed part 21.

The seal beads 122 and 123 of the gasket 1 are not changed to have easily supportable shapes. Accordingly, favorable sealing properties can be maintained.

In this sealing apparatus, the gap formed between the outer peripheral portion of the flange 14 and the inner peripheral surface 21c of the attachment recessed part 21 is not limited to that in the embodiment described above, and may be over the entire periphery of the flange 14, or may be present only at any one site. The gap is not necessarily the recessed portions 15 described above, and may be formed by providing projections at the outer peripheral portion of the flange 14. If the protrusions are provided, the gap is formed at a part other than the protrusions.

According to any of the embodiments, in a state where the gasket 1 is attached in the attachment recessed part 21 and the cover 3 is removed from the housing 2, at least a part of the outer peripheral portion of the gasket 1 (the outer peripheral portion or the lower surface of the flange 14 (the surface nearer to the bottom surface 21a) or the outer peripheral surface portion 12a that is of the gasket main body 12 and is other than the flange 14) can serve as supportable portions 13 facing the outside.

This sealing apparatus is not limited to that having a configuration where the gap is formed between the outer peripheral portion of the flange 14 and the inner peripheral surface 21c of the attachment recessed part 21.

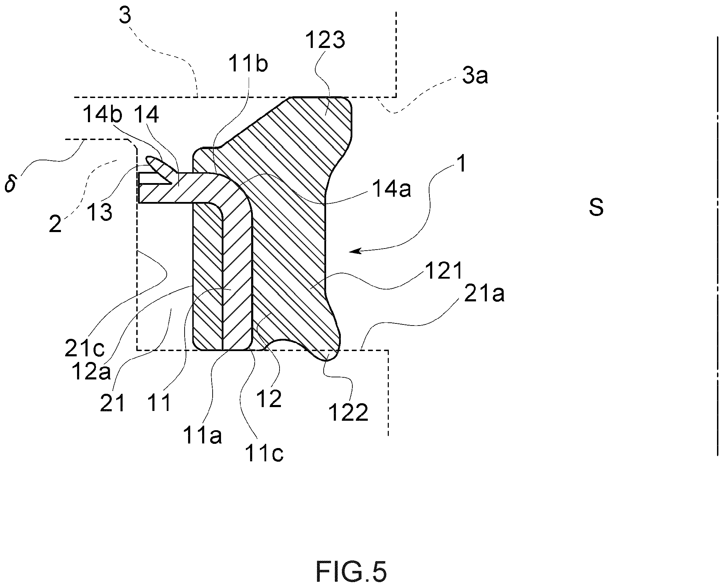

Fig. 5 is a longitudinal sectional view of the sealing apparatus according to another embodiment of the sealing apparatus according to the embodiment of the present invention described above.

If any gap is not formed between the outer peripheral portion of the flange 14 and the inner peripheral surface 21c of the attachment recessed part 21, for example, as shown in Fig. 5, by providing the upper surface portion (the surface nearer to the cover 3) of the flange 14 with cut-and-raised nails 14b, the lower surfaces of the cut-and-raised nails 14b are allowed to serve as the supportable portions 13.

### [Third embodiment]

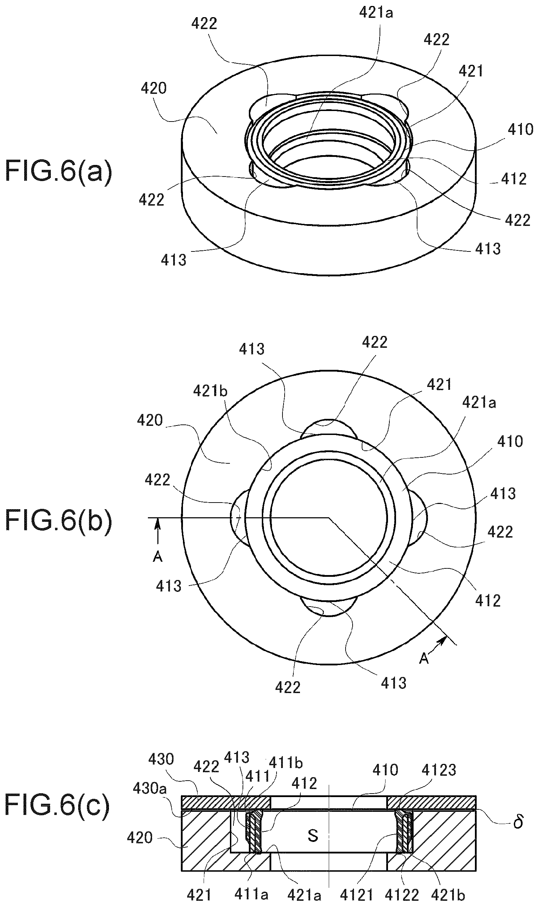

Fig. 6 is a perspective view (a) (with a cover being removed), a plan view (b) (with the cover being removed) and a longitudinal sectional view (c) taken along line A-A of (b) (with the cover being attached) of a sealing apparatus according to a third embodiment of the present invention.

As shown in Fig. 6(c), in a gasket 410, a gasket main body 412 is configured by being formed integrally with a reinforcing ring 411. The reinforcing ring 411 is provided for supplying the gasket 410 with strength and is formed to have a cylindrical shape appropriately using a metal, such as low-carbon free cutting steel, for example.

The length of the reinforcing ring 411 in the axial direction (the vertical direction in Fig. 6) is smaller than the depth of an attachment recessed part 421.

The gasket main body 412 is made of a rubber-like elastic material (a rubber material or a synthetic resin material having rubber-like elasticity) and is formed integrally with the inner peripheral surface and the outer peripheral surface of the reinforcing ring 411.

The gasket main body 412 includes: a base portion 4121 in which the reinforcing ring 411 is embedded; and a one-end-side seal bead 4122 and an other-end-side seal bead 4123 that are consecutive with the base portion 4121, are positioned at both the ends of the reinforcing ring 411 in the axial direction, and are oriented on the inner periphery side and in the directions facing away from each other in the axial direction. The one-end-side seal bead 4122 is closely contacted with a bottom surface 421a of the attachment recessed part 421. The other-end-side seal bead 4123 is closely contacted on an end surface 430a of a cover 430.

The base portion 4121 of the gasket main body 412 is formed from the inner peripheral surface to the outer peripheral surface of the reinforcing ring 411. Another end 411b of the reinforcing ring 411 in the axial direction is covered with the thin-walled gasket main body 412. One end 411a of the reinforcing ring 411 in the axial direction protrudes from an outer peripheral portion of the one-end-side seal bead 4122 in this embodiment, and may be covered with the gasket main body 412.

The one-end-side seal bead 4122 is formed to have a thinner wall and a smaller volume in comparison with the other-end-side seal bead 4123. Accordingly, the rigidity is lower than that of the other-end-side seal bead 4123. In other words, the other-end-side seal bead 4123 is formed to have a thicker wall and a larger volume in comparison with the one-end-side seal bead 4122, thereby achieving a higher rigidity than that of the one-end-side seal bead 4122. Accordingly, when the gasket main body 412 receives a compression force in the axial direction, the amount of deformation of the one-end-side seal bead 4122 is larger than the amount of deformation of the other-end-side seal bead 4123.

The gasket main body 412 is formed to have an outer diameter substantially equal to the inner diameter of the attachment recessed part 421. Accordingly, in the gasket 410, an inner peripheral surface 421b of the attachment recessed part 421 serves as a positioning surface, which can maintain the concentricity for the attachment recessed part 421.

According to a housing 420, in a state where the gasket 410 is attached in the attachment recessed part 421 and the cover 430 is attached, gaps 422 with the end surface 430a of the cover 430 are formed in at least parts of the outer peripheral portion of the attachment recessed part 421. In this embodiment, the gaps 422 are intermittently formed at the outer peripheral portion of the attachment recessed part 421 at an equal angle interval. In this embodiment, the gaps 422 are formed at four sites on the outer peripheral portion of the attachment recessed part 421 at 90° intervals. Each gap 422 is formed to have a semicircular column shape whose axial direction is parallel to that of the gasket 410, and have a shape open to the gasket 410.

Owing to the gaps 422 being formed, in a state where the gasket 410 is attached in the attachment recessed part 421 with the cover 430 being removed from the housing 420, at least parts (parts corresponding to the gaps 422) of the outer peripheral portion of the gasket 410 serve as supportable portions 413 facing the outside.

The supportable portions 413 are sites that can be supported at the outer peripheral surface of the gasket 410 by a jig, such as a driver, or fingers, when the cover 430 is removed from the housing 420 and the gasket 410 is removed from the inside of the attachment recessed part 421 and replaced. The supportable portions 413 are at least parts of the outer peripheral surface portion of the gasket main body 412. By inserting a jig into the gaps 422 and supporting the supportable portions 413, the gasket 410 can be easily removed from the inside of the attachment recessed part 421. By forming the gaps 422, the gasket 410 can be easily removed from the inside of the attachment recessed part 421 without using the jig.

In the sealing apparatus, it is significantly easy to remove the gasket 410 from the inside of the attachment recessed part 421 owing to the supportable portions 413. Even when the supportable portions 413 are supported, the seal beads 4122 and 4123 and the outer peripheral surface of the gasket main body 412 are not pressed against the bottom surface 421a and the inner peripheral surface 421b of the attachment recessed part 421. Accordingly, even when the seal bead 4122 and the outer peripheral surface adhere to the bottom surface 421a and the inner peripheral surface 421b, it is easy to remove the gasket 410 from the inside of the attachment recessed part 421.

The seal bead 4123 of the gasket 410 is not changed to have an easily supportable shape. Accordingly, favorable sealing properties can be maintained.

Next, operation when the gasket 410 is attached in the attachment recessed part 421 will be described.

The gasket 410 is disposed in the attachment recessed part 421 formed in the housing 420. In Fig. 6, the one-end-side seal bead 4122 is nearer to the bottom surface 421a of the attachment recessed part 421. However, the assembling direction is not limited.

When the gasket 410 is disposed in the attachment recessed part 421, and the housing 420 and the cover 430 are clamped with bolts or the like, not shown, the gasket 410 is pressed by the cover 430, and the one-end-side and other-end-side seal beads 4122 and 4123 receive the compression force in the axial direction. At this time, the other-end-side seal bead 4123 have a thick wall, a large volume and a high rigidity, while the one-end-side seal bead 4122 has a low rigidity and tends to be deformed. Accordingly, the one-end-side seal bead 4122 is preferentially deformed and collapses toward the inner periphery side. As a result, the gasket 410 is set in the attachment recessed part 421 so as to be on the one-end-side seal bead 4122 side, that is, in a state of residing unevenly closer to the bottom surface 421a of the attachment recessed part 421.

In this set state, the gasket 410 is in a state where the one end 411a of the reinforcing ring 411 in the axial direction is contacted on the bottom surface 421a of the attachment recessed part 421 or is close to the bottom surface 421a. Accordingly, the one-end-side seal bead 4122 does not further collapse toward the inner periphery side.

Subsequently, after clamping of the housing 420 and the cover 430 is completed, the compression force in the axial direction is absorbed by the other-end-side seal bead 4123 collapsing toward the inner periphery side or being compressed. This is because the other-end-side seal bead 4123 has a sufficient interference with the end surface 430a of the cover 430 even if the one-end-side seal bead 4122 has completely collapsed and the one end 411a of the reinforcing ring 411 in the axial direction is in the state of being contacted on the bottom surface 421a of the attachment recessed part 421. Accordingly, as for the gasket 410, the one-end-side seal bead 4122 is contacted closely on the bottom surface 421a of the attachment recessed part 421, and the other-end-side seal bead 4123 is contacted closely on the end surface 430a of the cover 430, thus sealing the sealing target space S.

When a fluid pressure that is a high pressure is present on the inner periphery side of the gasket 410 in this attached state, the fluid pressure is applied on each of the one-end-side and other-end-side seal beads 4122 and 4123. At this time, the one-end-side seal bead 4122 having a low rigidity is backed up from the outer periphery side by the one end 411a of the reinforcing ring 411 in the axial direction residing at the position contacted on or close to the bottom surface 421a of the attachment recessed part 421. Accordingly, deformation the one-end-side seal bead 4122 toward the outer periphery side is suppressed, and there is no possibility of sticking out to the outer periphery side, thus maintaining excellent sealing properties.

The gasket 410 in the attached state is pressed against the bottom surface 421a of the attachment recessed part 421 and resides unevenly closer to the bottom surface 421a of the attachment recessed part 421, and the one end 411a of the reinforcing ring 411 in the axial direction is contacted on the bottom surface 421a to prevent further movement. Accordingly, there is substantially no movement of the gasket 410 in the axial direction. Consequently, even if the fluid pressure is intermittently and repetitively applied, there is no possibility of causing an abrasion or the like due to repetitive movement of the gasket 410 in the axial direction with a large stroke.

When the other-end-side seal bead 4123 having a relatively high rigidity receives a fluid pressure, a force of deformation to the outer periphery side is applied. However, this bead has a thicker wall and a larger volume than the one-end-side seal bead 4122, and is contacted closely on the end surface 430a of the cover 430 with a sufficient interference. Consequently, large collapse of the other-end-side seal bead 4123 to the outer periphery side does not occur. Accordingly, the other-end-side seal bead 4123 is contacted further closely on the end surface 430a, which can improve the sealing properties. Accordingly, the gasket 410 exerts excellent sealing properties also on the other-end-side seal bead 4123.

Furthermore, the other end 411b of the reinforcing ring 411 in the axial direction is disposed in the gasket main body 412 adjacent to the other-end-side seal bead 4123. Consequently, the other end 411b side of the reinforcing ring 411 in the axial direction functions to prevent the other-end-side seal bead 4123 from collapsing to the outer periphery side. Accordingly, the other-end-side seal bead 4123 does not stick out to the gap δ.

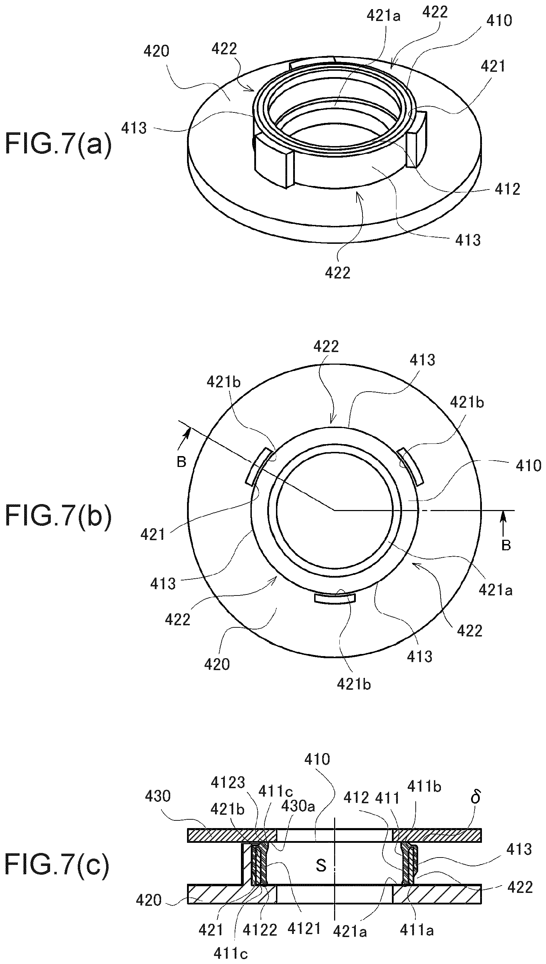

It is preferable that chamfers 411c be formed on inner peripheral edges of both ends of the reinforcing ring 411 (see Fig. 7(c) described later). Accordingly, when a deformation force to the outer periphery side due to a fluid pressure is applied to the one-end-side and other-end-side seal beads 4122 and 4123, it can prevent stress from being concentrated against the inner peripheral edges of both ends of the reinforcing ring 411 and can effectively prevent peeling of adhesion and a crack from occurring.

### [Fourth embodiment]

Fig. 7 is a perspective view (a) (with a cover being removed), a plan view (b) (with the cover being removed) and a longitudinal sectional view (c) taken along line B-B of (b) (with the cover being attached) of a sealing apparatus according to a fourth embodiment of the present invention.

In this sealing apparatus, the gaps 422 between the housing 420 and the end surface 430a of the cover 430 may be formed to be in a state of being consecutive to each other on the outer periphery side of the housing 420, as shown in Fig. 7. In this embodiment, the gaps 422 are formed at three sites at 120° intervals on the outer peripheral portion of the attachment recessed part 421, and are consecutive to each other on the outer periphery side of the housing 420. That is, in the housing 420 of this embodiment, wall parts (parts between the gaps 422) remain at three sites by 120° intervals on the outer peripheral portion of the attachment recessed part 421, and parts other than these wall parts are apart from the end surface 430a of the cover 430 consecutively from the attachment recessed part 421 to the outer peripheral edge of the housing 420. The housing 420 and the cover 430 may have matching surfaces at sites which are not shown.

Owing to the gaps 422 being formed, in a state where the gasket 410 is attached in the attachment recessed part 421 with the cover 430 being removed from the housing 420, at least parts (parts corresponding to the gaps 422) of the outer peripheral portion of the gasket 410 serve as supportable portions 413 facing the outside.

The supportable portions 413 are sites that can be supported at the outer peripheral surface of the gasket 410 by a jig, such as a driver, or fingers, when the cover 430 is removed from the housing 420 and the gasket 410 is removed from the inside of the attachment recessed part 421 and replaced. It is significantly easy to remove the gasket 410 from the inside of the attachment recessed part 421 owing to the supportable portions 413. Even when the supportable portions 413 are supported, the seal bead 4122 and the outer peripheral surface of the gasket main body 412 are not pressed against the bottom surface 421a and the inner peripheral surface 421b of the attachment recessed part 421. Accordingly, even when the seal bead 4122 and the outer peripheral surface adhere to the bottom surface 421a and the inner peripheral surface 421b, it is easy to remove the gasket 410 from the inside of the attachment recessed part 421.

The seal bead 4123 of the gasket 410 is not changed to have an easily supportable shape. Accordingly, favorable sealing properties can be maintained.

### [Fifth embodiment]

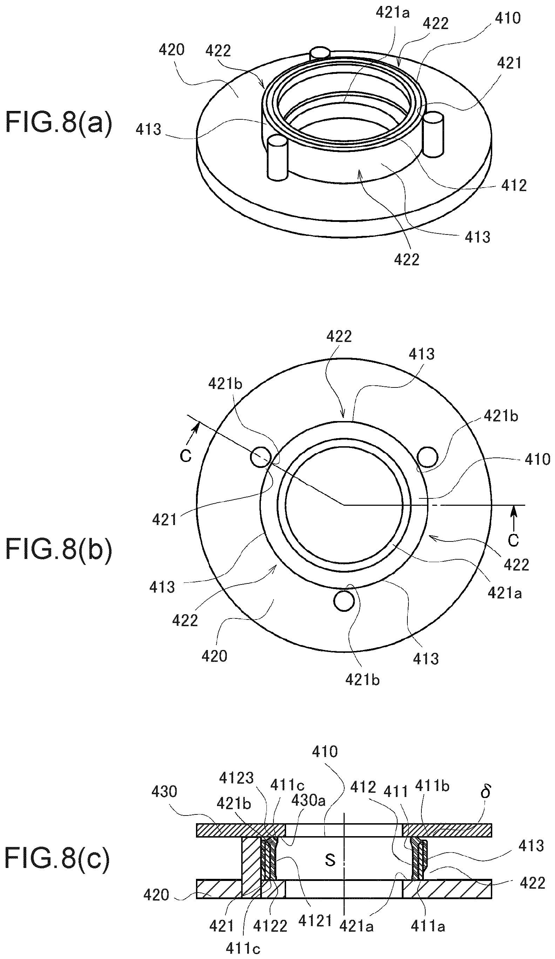

Fig. 8 is a perspective view (a) (with a cover being removed), a plan view (b) (with the cover being removed) and a longitudinal sectional view (c) taken along line C-C of (b) (with the cover being attached) of a sealing apparatus according to a fifth embodiment of the present invention.

In this sealing apparatus, the gaps 422 between the housing 420 and the end surface 430a of the cover 430 may be formed to be in a state of being consecutive to each other on the outer periphery side of the housing 420, as shown in Fig. 8. In this embodiment, the gaps 422 are formed at three sites at 120° intervals on the outer peripheral portion of the attachment recessed part 421, and are consecutive to each other on the outer periphery side of the housing 420. That is, in the housing 420 of this embodiment, round rod portions (parts between the gaps 422) remain at three sites by 120° intervals on the outer peripheral portion of the attachment recessed part 421, and parts other than these round rod portions are apart from the end surface 430a of the cover 430 consecutively from the attachment recessed part 421 to the outer peripheral edge of the housing 420. Note that as shown in Fig. 8(c), the round rod portions may be separated round rod members planted in the housing 420. The housing 420 and the cover 430 may have matching surfaces at sites which are not shown.

Owing to the gaps 422 being formed, in a state where the gasket 410 is attached in the attachment recessed part 421 with the cover 430 being removed from the housing 420, at least parts (parts corresponding to the gaps 422) of the outer peripheral portion of the gasket 410 serve as supportable portions 413 facing the outside.

The supportable portions 413 are sites that can be supported at the outer peripheral surface of the gasket 410 by a jig, such as a driver, or fingers, when the cover 430 is removed from the housing 420 and the gasket 410 is removed from the inside of the attachment recessed part 421 and replaced. It is significantly easy to remove the gasket 410 from the inside of the attachment recessed part 421 owing to the supportable portions 413. Even when the supportable portions 413 are supported, the seal bead 4122 and the outer peripheral surface of the gasket main body 412 are not pressed against the bottom surface 421a and the inner peripheral surface 421b of the attachment recessed part 421. Accordingly, even when the seal bead 4122 and the outer peripheral surface adhere to the bottom surface 421a and the inner peripheral surface 421b, it is easy to remove the gasket 410 from the inside of the attachment recessed part 421.

The seal bead 4123 of the gasket 410 is not changed to have an easily supportable shape. Accordingly, favorable sealing properties can be maintained.

### [Sixth embodiment]

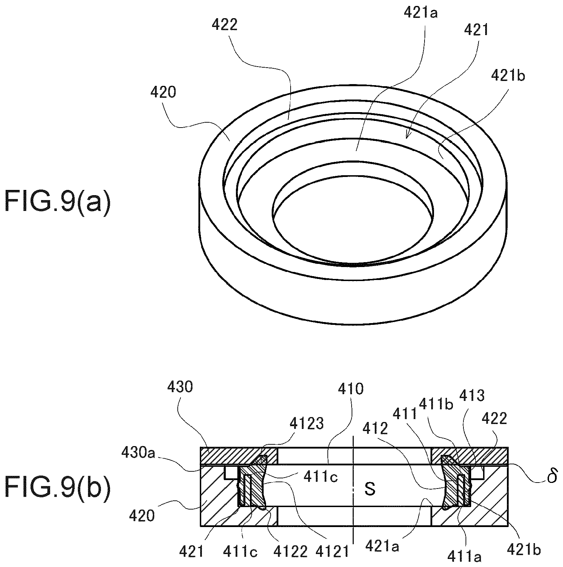

Fig. 9 is a perspective view (a) (with a cover and a gasket being removed) and a longitudinal sectional view (b) taken along the center line (with the cover and the gasket being attached) of a sealing apparatus according to a sixth embodiment of the present invention.

In this sealing apparatus, the gaps 422 between the housing 420 and the end surface 430a of the cover 430 may be formed consecutively over the entire periphery of the outer peripheral portion of the attachment recessed part 421, as shown in Fig. 9.

In this embodiment, the gap 422 is consecutively formed over the entire periphery of the outer peripheral portion of the attachment recessed part 421. The depth (the distance from the end surface 430a of the cover 430 to the bottom surface of the gap 422) is shallower than that of the attachment recessed part 421. That is, the housing 420 of this embodiment is in a state where the outer peripheral portion of the attachment recessed part 421 is enlarged in diameter on the cover 430 side. In the shown example, the gap 422 is consecutively formed over the entire periphery of the outer peripheral portion of the attachment recessed part 421. However, not limited thereto, the gap 422 may be provided at one site or intermittently. It is preferable that the depth of the gap 422 be deeper than the position of the other end 411b of the reinforcing ring 411 in the axial direction.

Owing to the gap 422 being formed, in a state where the gasket 410 is attached in the attachment recessed part 421 with the cover 430 being removed from the housing 420, the outer peripheral portion of the gasket 410 serves, over the entire periphery, as a supportable portion 413 facing the outside.

The supportable portions 413 is sites that can be supported at the outer peripheral surface of the gasket 410 by a jig, such as a driver, or fingers, when the cover 430 is removed from the housing 420 and the gasket 410 is removed from the inside of the attachment recessed part 421 and replaced. It is significantly easy to remove the gasket 410 from the inside of the attachment recessed part 421 owing to the supportable portion 413. Even when the supportable portion 413 is supported, the seal bead 4122 and the outer peripheral surface of the gasket main body 412 are not pressed against the bottom surface 421a and the inner peripheral surface 421b of the attachment recessed part 421. Accordingly, even when the seal bead 4122 and the outer peripheral surface adhere to the bottom surface 421a and the inner peripheral surface 421b, it is easy to remove the gasket 410 from the inside of the attachment recessed part 421.

The seal bead 4123 of the gasket 410 is not changed to have an easily supportable shape. Accordingly, favorable sealing properties can be maintained.

### [Seventh embodiment]

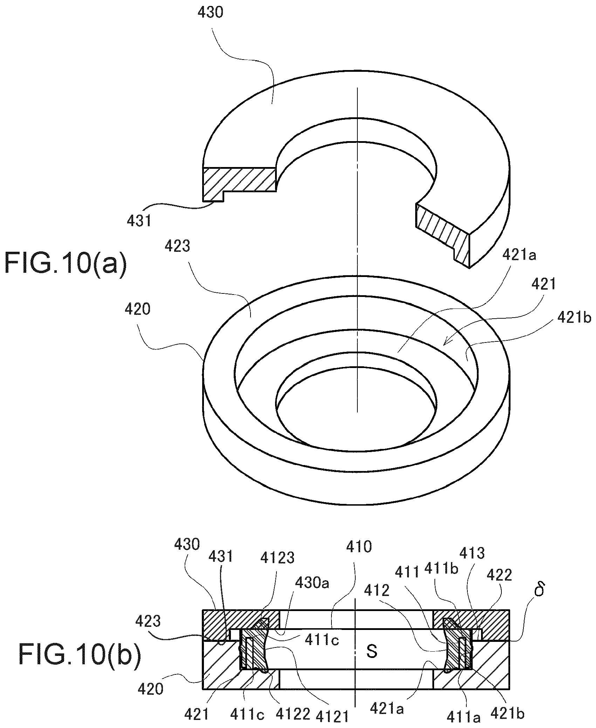

Fig. 10 is an exploded perspective view (a) (with a gasket being removed) and a longitudinal sectional view (b) taken along the center line (with a cover and the gasket being attached) of a sealing apparatus according to a seventh embodiment of the present invention.

In the case where the gap 422 between the housing 420 and the end surface 430a of the cover 430 is formed consecutively over the entire periphery of the outer peripheral portion of the attachment recessed part 421 (sixth embodiment), the gap 422 may be formed over the inner peripheral edge of the housing 420 as shown in Fig. 10. The depth of the gap 422 (the distance from the end surface 430a of the cover 430 to the bottom surface of the gap 422) is shallower than that of the attachment recessed part 421. That is, as for the housing 420 of this embodiment, the entire outer periphery side of the attachment recessed part 421 in the sixth embodiment is removed and an end surface 423 facing the cover 430 side is made flat, and an annular protruding portion 431 protruding from the end surface 430a of the cover 430 toward the housing 420 is formed on the outer peripheral portion at a portion of the cover 430 that faces the end surface 423 of the housing 420. Accordingly, the housing 420 is in a state where the housing 420 is apart from the end surface 430a of the cover 430. In the state where the cover 430 is attached to the housing 420, the outer peripheral portion of the gasket 410 is disposed on the inner periphery side of the protruding portion 431, and the gap 422 is formed by the end portion 430a of the cover 430, the protruding portion 431 and the end surface 423 of the housing 420. In the state where the cover 430 is attached to the housing 420, it is preferable that the depth of the gap 422 be deeper than the position of the other end 411b of the reinforcing ring 411 in the axial direction.

Owing to the gap 422 being formed, in a state where the gasket 410 is attached in the attachment recessed part 421 with the cover 430 being removed from the housing 420, the outer peripheral portion of the gasket 410 serves, over the entire periphery, as a supportable portion 413 facing the outside.

The supportable portion 413 is sites that can be supported at the outer peripheral surface of the gasket 410 by a jig, such as a driver, or fingers, when the cover 430 is removed from the housing 420 and the gasket 410 is removed from the inside of the attachment recessed part 421 and replaced. It is significantly easy to remove the gasket 410 from the inside of the attachment recessed part 421 owing to the supportable portion 413. Even when the supportable portion 413 is supported, the seal bead 4122 and the outer peripheral surface of the gasket main body 412 are not pressed against the bottom surface 421a and the inner peripheral surface 421b of the attachment recessed part 421. Accordingly, even when the seal bead 4122 and the outer peripheral surface adhere to the bottom surface 421a and the inner peripheral surface 421b, it is easy to remove the gasket 410 from the inside of the attachment recessed part 421.

The seal bead 4123 of the gasket 410 is not changed to have an easily supportable shape. Accordingly, favorable sealing properties can be maintained.

Note that in each embodiment described above, bulging portions for the gaps may be provided for the end surface 430a of the cover 430, and the gaps 422 may be filled with the bulging portions for the gaps.

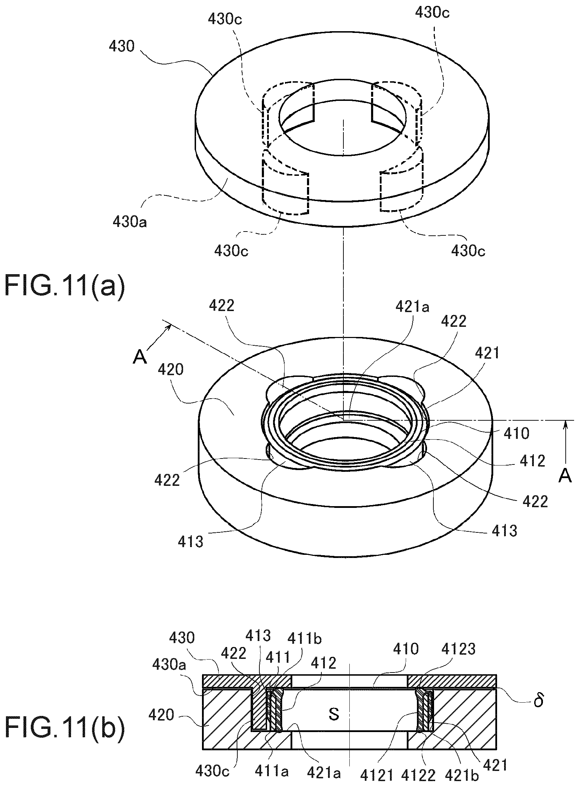

Fig. 11 is an exploded perspective view (a) and a longitudinal sectional view (b) taken along line A-A of (a) (with a cover being attached) of a sealing apparatus according to the third embodiment of the present invention in a mode where gaps are filled with bulging portions for the gaps.

In the third embodiment, as shown in Fig. 11, the bulging portions for the gaps 430c corresponding to the shapes of the gaps 422 may be provided on the outer periphery side with respect to the position where the other-end-side seal bead 4123 is closely contacted on the end surface 430a of the cover 430, and when the cover 430 is attached, the bulging portions for the gaps 430c may enter the gaps 422 to fill the gaps 422. The bulging portions for the gaps 430c may be formed integrally with the cover 430, or may be configured by attaching separate members to the cover 430. This is also applicable to the other embodiments.

### List of Reference Signs

- 1: Gasket,
- 11: Reinforcing ring,
- 11a: One end in axial direction,
- 11b: Another end in axial direction,
- 11c: Chamfer,
- 12:: Gasket main body,
- 12a: Outer peripheral surface portion,
- 121: Base portion,
- 122: One-end-side seal bead,
- 123: Other-end-side seal bead,
- 124: Cover portion,
- 13: Supportable portion,
- 14: Flange,
- 14a: Consecutive link portion,
- 14b: Cut-and-raised nail,
- 15: Recessed portion,
- 2: Housing,
- 21: Attachment recessed part,
- 21a: Bottom surface,
- 21b: Opening edge,
- 21c: Inner peripheral surface,
- 3: Cover,
- 3a: End surface,
- S: Sealing target space,
- δ: Gap,
- 410: Gasket,
- 411: Reinforcing ring,
- 411a: One end in axial direction,
- 411b: Another end in axial direction,
- 411c: Chamfer,
- 412: Gasket main body,
- 4121: Base portion,
- 4122: One-end-side seal bead,
- 4123: Other-end-side seal bead,
- 413: Supportable portion,
- 420: Housing,
- 421: Attachment recessed part,
- 421a: Bottom surface,
- 421b: Inner peripheral surface,
- 422: Gap,
- 430: Cover,
- 430a: End surface,
- 430c: Bulging portion for gap

## Claims

1. A sealing apparatus using a gasket in which a gasket main body is integrally formed with a reinforcing ring, the gasket main body having a one-end-side seal bead and an other-end-side seal bead which are positioned on one end side and another end side of the reinforcing ring in an axial direction and are oriented in directions facing away from each other in the axial direction, the one-end-side seal bead being closely contacted on a bottom surface of an attachment recessed part formed in a housing, and the other-end-side seal bead being closely contacted on a cover which closes the attachment recessed part of the housing,
**characterized in that**, in a state of being attached in the attachment recessed part with the cover removed from the housing, at least a part of an outer peripheral portion of the gasket serves as a supportable portion by providing a flange consecutively provided on an outer periphery side of the reinforcing ring.

2. The sealing apparatus according to claim 1, **characterized in that** a gap with an inner peripheral surface of the attachment recessed part is formed in at least a part of the flange.

3. A gasket in which a gasket main body is integrally formed with a reinforcing ring, the gasket main body having a one-end-side seal bead and an other-end-side seal bead which are positioned on one end side and another end side of the reinforcing ring in an axial direction and are oriented in directions facing away from each other in the axial direction, the one-end-side seal bead being closely contacted on a bottom surface of an attachment recessed part formed in a housing, and the other-end-side seal bead being closely contacted on a cover which closes the attachment recessed part of the housing,
**characterized in that**, in a state of being attached in the attachment recessed part with the cover removed from the housing, at least a part of an outer peripheral portion of the gasket serves as a supportable portion by providing a flange consecutively provided on an outer periphery side of the reinforcing ring.

4. The gasket according to claim 3, **characterized in that** a gap with an inner peripheral surface of the attachment recessed part is formed in at least a part of the flange.

5. The gasket according to claim 3 or 4, **characterized in that** a consecutive link portion between the reinforcing ring and the flange is a curved surface.

6. A sealing apparatus using a gasket in which a gasket main body is integrally formed with a reinforcing ring, the gasket main body having a one-end-side seal bead and an other-end-side seal bead which are positioned on one end side and another end side of the reinforcing ring in an axial direction and are oriented in directions facing away from each other in the axial direction, the one-end-side seal bead being closely contacted on a bottom surface of an attachment recessed part formed in a housing, and the other-end-side seal bead being closely contacted on an end surface of a cover which closes the attachment recessed part of the housing,
wherein in a state where the gasket is attached in the attachment recessed part with the cover attached, by forming a gap with the end surface of the cover in at least a part of an outer peripheral portion of the attachment recessed part of the housing, at least the part of the outer peripheral portion of the gasket serves as a supportable portion facing an outside, in a state where the cover is removed.

7. The sealing apparatus according to claim 6, **characterized in that** the gap is intermittently formed at an equal angle interval on the outer peripheral portion of the attachment recessed part.

8. The sealing apparatus according to claim 6, **characterized in that** the gap is formed consecutively over an entire periphery of the outer peripheral portion of the attachment recessed part.
